# EUROPEAN PATENT SPECIFICATION

(11) **EP 0 786 399 B1**
(45) Date of publication and mention of the grant of the patent: **10.10.2001**
(21) Application number: 97101373.5
(22) Date of filing: 29.01.1997
(51) Int. Cl.: B62M 23/02

(54) **Muscle-operated vehicle with an auxiliary electrical power drive system and method for controlling said system**
Mit Muskelkraft betätigtes Fahrzeug mit einem elektrischen Hilfsantrieb und Verfahren zu dessen Regelung
Véhicule propulsé par force musculaire et à assistance électrique et procédé de commande

(30) Priority: 29.01.1996 JP 1297396
(43) Date of publication of application: 30.07.1997
(73) Proprietor: YAMAHA HATSUDOKI KABUSHIKI KAISHA, Iwata-shi Shizuoka-ken, 438 (JP)
(72) Inventor: Miyata, Syoichiro, Iwata-shi, Shizuoka-ken (JP)
(74) Representative: Grünecker, Kinkeldey, Stockmair & Schwanhäusser Anwaltssozietät

(56) References cited:
- EP-A- 0 569 954
- EP-A- 0 590 674
- US-A- 4 062 421
- PATENT ABSTRACTS OF JAPAN vol. 096, no. 003, 29 March 1996 & JP 07 309283 A (YAMAHA MOTOR CO LTD), 28 November 1995,
- PATENT ABSTRACTS OF JAPAN vol. 095, no. 009, 31 October 1995 & JP 07 143603 A (AQUEOUS RES:KK), 2 June 1995,
- PATENT ABSTRACTS OF JAPAN vol. 095, no. 011, 26 December 1995 & JP 07 196070 A (RIKEN CORP), 1 August 1995,

## Description

This invention relates to a muscle-operated vehicle, especially bicycle, comprising a muscle-operated driving system having a crankshaft rotatable by muscle power from a driver, an electrical power drive system for providing assist power, and a controller for controlling the amount of assist power from said electrical power drive system in response to vehicle operating conditions detected and to a method for controlling an electrical assist power of a muscle-operated vehicle, especially bicycle, comprising a muscle-operated driving system having a crankshaft rotatable by muscle power, an electrical power drive system for providing assist power, and a controller for controlling the amount of assist power from said electrical power drive system in response to vehicle operating conditions detected.

Such a muscle-operated vehicle is disclosed in EP-A-0 569 954.

Therefore, in recent years, power-assisted vehicles are proposed in which assist power is supplied from an electric motor according to pedal force applied to pedals and vehicle speed. Such a kind of vehicles are constituted that, at the time of starting from the standing state, a large amount of assist power is supplied because a large pedal force is required and the vehicle speed is almost zero. Furthermore, detection of the pedal force and the vehicle speed is usually carried out through detection of crankshaft input torque and crankshaft rotation speed for reasons of avoiding unauthorized alteration and saving power consumption during downhill run by stopping the electric motor.

However, if the crankshaft input torque and crankshaft rotation speed are used in place of the pedal force and vehicle speed as in the conventional constitution, when the vehicle is coasting, the vehicle speed is determined as zero and the vehicle is determined as standing because the crankshaft is not rotating. As a result, a problem occurs that a large amount of assist power is supplied when the vehicle running state changes from the coasting state to powered run state and running feeling is impaired.

Accordingly, it is an objective of the present invention to provide an improved muscle-operated vehicle as indicated above facilitating with simple technical means to always supply an appropriate amount of assist power according to the running conditions of the vehicle and, in addition, to improve the running feeling.

According to the present invention, this objective is solved for a muscle-operated vehicle as indicated above in that said controller comprises determining means for determining whether said vehicle is being started or is being re-accelerated after coasting for controlling in response to the determination made the ratio of assist power to the muscle power applied to the crankshaft and thereby the amount of power assist for vehicle starting conditions and vehicle re-acceleration conditions individually.

According to preferred embodiments of the present invention, said controller is adapted to control the ratio of assist power to the muscle power such that this ratio of assist power to muscle power gradually increases under reacceleration conditions.

In order to further enhance the determining possibility, it is advantageous when said determining means is adapted to determine that the vehicle is being started based on whether the rotational speed of said crankshaft is equal to or smaller than a specified value when a muscle power detectable by a pedal force sensor reaches a specified value and to determine that the vehicle is being reaccelerated based on whether the rotational speed of said crankshaft is equal to or larger than the specified value when the muscle power reaches said specified value.

This possibility may be still further enhanced when said determining means is adapted to determine whether said vehicle is being started or reaccelerated according to which occurs earlier the time when the muscle power reaches a specified value or the time when the rotational speed of the crankshaft reaches a specified value.

It is a further objective of the present invention to provide an improved method for controlling an assist power of a muscle-operated vehicle as indicated above which facilitates to always supply an appropriate amount of assist power according to running conditions of the vehicle and, in addition, to improve the running feeling.

According to the present invention, this further objective for a method for controlling an electrical assist power of a muscle-operated vehicle as indicated above is solved in that it is determined whether said vehicle is being started or is being re-accelerated after coasting and that the ratio of assist power from said electrical power drive means to the muscle power applied to the crankshaft and thereby the amount of power assist is controlled individually for vehicle starting conditions and vehicle re-acceleration conditions in response to the results of the determining step.

According to preferred embodiments of the present invention, said controller controls the ratio of assist power to the muscle power such that this ratio of assist power to muscle power gradually increases under reacceleration conditions.

In order to further enhance the determining possibility, it is advantageous when said determining means determines that the vehicle is being started based on whether the rotational speed of said crankshaft is equal to or smaller than a specified value when a muscle power detectable by a pedal force sensor reaches a specified value and to determine that the vehicle is being reaccelerated based on whether the rotational speed of said crankshaft is equal to or larger than the specified value when the muscle power reaches said specified value.

According to another preferred embodiment of the invention, it is advantageous when said determining means determines that the vehicle is being started based on whether the rotational speed of said crankshaft reaches a specified value after the muscle power has reached a specified value and determines that the vehicle is reaccelerated based on whether the muscle power reaches a specified value after the rotational speed of the crankshaft has reached the specified value.

Other preferred embodiments of the present invention are laid down in further dependent claims.

In the following, the present invention is explained in greater detail with respect to several embodiments thereof in conjunction with the accompanying drawings, wherein:
FIG. 1 is a side view of a bicycle provided with an assist power control device of an embodiment of the invention;
FIG. 2 shows the structure of the above-described control device;
FIG. 3 shows a constitution of another type of battery to be employed in the bicycle;
FIG. 4 is a characteristic drawing showing relationships between human power torque, crank speed, and time at the time of starting the bicycle;
FIG. 5 is a characteristic drawing showing relationships between human power torque, crank speed, and time at the time of reaccelerating the bicycle;
FIG. 6 is a flow chart for describing operation of the control device; and
FIG. 7 is a characteristic drawing for describing the assist ratio of reacceleration of the bicycle.

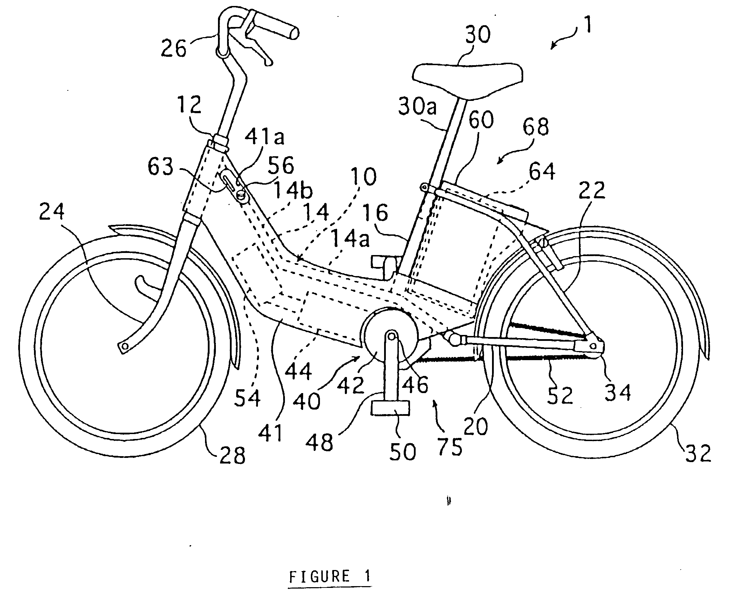

FIG. 1 shows a power-assisted bicycle 1, a vehicle body frame 10 of which comprises a head pipe 12, a down tube 14 extending from the head pipe 12 obliquely rear downward, a seat tube 16 rising up from the rear part of the down tube 14, right and left paired rear arms 20 extending rearward from the rear end of the down tube 14, and right and left paired seat stays 22 connecting the rear ends of the rear arms 20 to the upper ends of the seat stays 22.

A front fork 24 is supported for free right and left rotation about its axis on the head pipe 12. A front wheel 28 is bearing-supported at the lower end of the front fork 24. Steering handlebars 26 are attached to the upper end of the front fork 24. A seat post 30a is inserted into the seat tube 16. A rear wheel 32 is rotatably attached between the rear ends of the rear arms 20, The rear wheel 32 has a hub 34 which contains a variable transmission.

A power unit (an electric power drive system) 40 as a power source of the power-assisted bicycle comprises a power case 42 and a permanent magnet type DC motor 44 extending from the power case 42 obliquely up forward and disposed in a vehicle cover 41. The power case 42 is attached below the rear part of the down tube 14. The electric motor 44 is parallel to the rear part 14a of the down tube 14.

A crankshaft 46 passes through the power case 42 in the direction of the vehicle width. Both ends of the crankshaft 46 are provided with crank arms 48 (only one is shown). To the crank arms 48 are attached crank pedals 50. A human power drive system 75 is constituted such that pedal force applied to the crank pedals 50 is transmitted through a chain 52 to the rear wheel 32.

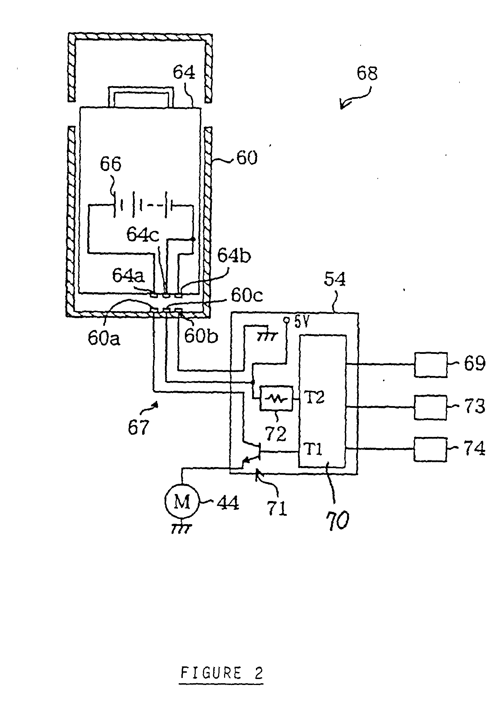

The pedal force applied to the crank pedals 50 is detected with a pedal force sensor 73 (shown in FIG. 2) disposed within the power case 42. Output of the electric motor 44 (assist power) is controlled with a controller 54 according to the pedal force and the crankshaft rotation speed. The pedal force on the pedals 50 and the assist power of the electric motor 44 are combined together in the power case 42, and the combined force is transmitted through the chain 52 to the rear wheel 32. By the way, the controller 54 for controlling the output of the motor 44 is attached at a position below the front part 14b of the down tube 14 within the vehicle cover 41.

In a vicinity where the vehicle body frame 10 is connected to the head pipe 12 are provided a main switch 56 and an insertion slot 63 facing outward from an opening 41a formed on the vehicle body cover 41. A memory card (not shown) with memory of assist power supply degree commensurate with a rider's physical strength and liking is to be inserted in the slot 63.

A nickel-cadmium battery 64 is a power source for the power unit 40 and comprises a large number of battery cells 66 in series contained in a case as shown in FIG. 2. The battery 64 is removably disposed in a battery case 60 disposed in a space between the seat tube 16 and the front edge of the rear wheel 32. By the way, the upper end opening of the battery case 60 is located between the right and left seat stays 22 and projects upward. The nickel-cadmium battery 64 may be taken out upward through the space between the right and left seat stays 22.

The bottom outside surface of the case for the nickel-cadmium battery 64 are formed with positive and negative pole terminals 64a, 64b, and a determination terminal 64c for determining battery type. By the way, the determination terminal 64c may also be connected to a position near the negative pole terminal of the battery cells 66.

On the bottom inside surface of the battery case 60 are provided a positive pole terminal 60a, a negative pole terminal 60b, and a determination terminal 60c corresponding to the nickel-cadmium battery 64 side terminals 64a, 64b, and 64c. These terminals are arranged to be automatically connected when the nickel-cadmium battery 64 is inserted into the battery case 60.

The terminals 60a, 60b, and 60c on the bottom of the battery case 60 are connected through cables 67 to the controller 54. This constitutes a power supply control device 68 which determines the battery type, displays the battery type on an indicator 69, and controls the amount of electric power to the electric motor 44 of the power unit 40 according to the battery type.

The controller 54 is provided with battery type detection means and a CPU 70 functioning as an assist power control means. A terminal T1 of the CPU 70 is connected to a base of a transistor 71 working as a switching element interposed between the positive pole terminal 60a and the electric motor 44. A terminal T2 is connected to the determination terminal 60c through an IF 72 having a load such as a resistor. To the IF 72 is connected to a 5 volt power source. The negative pole terminal 60b is grounded within the controller 54.

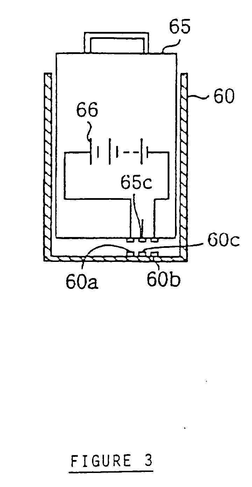

Here, the battery type determining function of the controller 54 is for determining whether the battery is the nickel-cadmium battery 64 or other type of battery 65 shown in FIG. 3. In order to make the determination possible, the determination terminal 65c is open as shown in FIG. 3 in contrast to the internal connection shown in FIG. 2.

The battery type determining operation is carried out as follows.

When the nickel-cadmium battery 64 is installed in the battery case 60, the determination terminal 60c is grounded through the determination terminal 64c located on the battery side and the voltage at the terminal T2 of the CPU 70 becomes 0 volt (low). On the other hand, when the battery 65 is installed, the determination terminal 60c is open through the terminal 65c located on the battery side and the voltage at the terminal T2 of the CPU 70 becomes about 5 volts (high). Therefore, when the voltage at the terminal T2 is low, determination is made that the nickel-cadmium battery 64 is installed, and when the voltage at the terminal T2 is high, determination is made that another type of battery 65 is installed.

The battery type detected as described above is indicated on the indicator (type indication means) 69 and at the same time a battery characteristic commensurate with the battery time is set, power supply amount to the electric motor 44 is controlled according to that characteristic, and assist power is controlled according to the pedal force applied to the pedals 50.

With the controller 54, the assist power is controlled according to the battery type, the assist power is controlled depending on whether the vehicle is being started or reaccelerated. To the CPU 70 of the controller 54 are inputted a pedal force (human power) from the pedal force sensor 73 and a crankshaft rotation speed (vehicle speed) from a vehicle speed sensor 74, and the power supply amount to the electric motor 44 is controlled according to the pedal force and the vehicle speed.

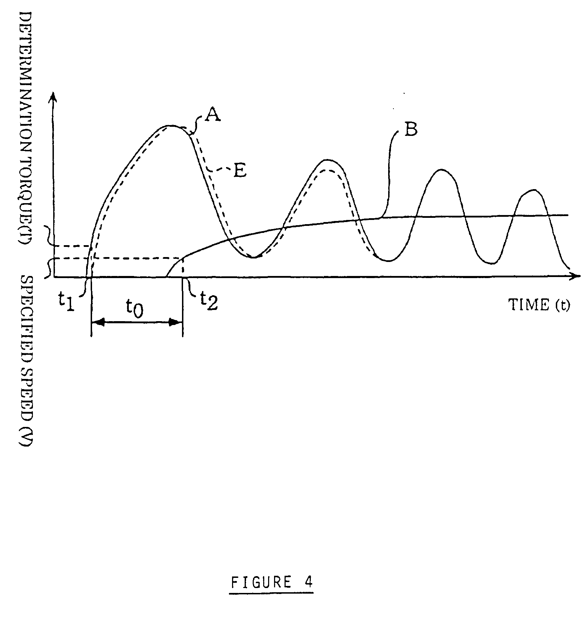

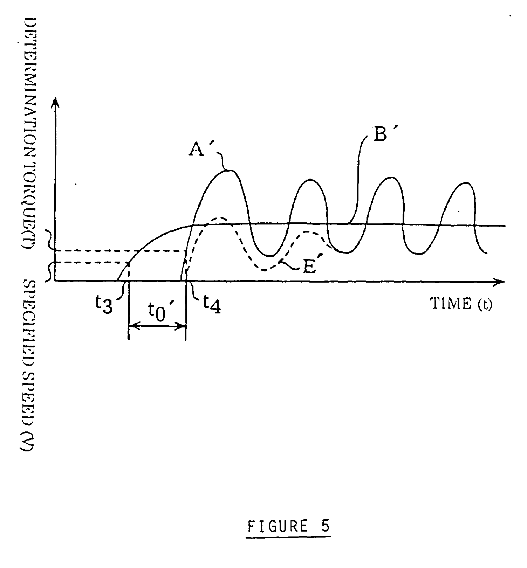

Here, relationship between the human power torque and the crankshaft rotation speed during start and reacceleration of an ordinary bicycle is as shown in FIGs. 4 and 5. That is to say, while the crankshaft rotation speed B rises after a specified period of time has elapsed from the start of application of human power torque A at the time of start as shown in FIG. 4, at the time of reacceleration as shown in FIG. 5, the human power torque A' is detected after the crankshaft rotation speed B' rises to a specified value to agree with the rear wheel speed. By the way, the symbols E and E' in FIGs. 4 and 5 show how the assist torque (assist power) changes during start and reacceleration. While the assist power E is controlled to be about the same as a human power torque A, the assist power E' during reacceleration is controlled to be smaller than a human power torque A'.

In this embodiment, whether the vehicle is being started or reaccelerated is determined with the crankshaft rotation speed when the human power torque reaches a specified determination torque (assist torque supply start determination torque). In other words, as shown in FIG. 4, the vehicle is determined to be being started if the crankshaft rotation speed is equal to or below the specified speed V at the time t1 when the human power torque A reaches the determination torque T. On the other hand, the vehicle is determined to be being reaccelerated if the crankshaft rotation speed is equal to or above the specified speed V at the time t4 when the human power torque reaches the determination torque T.

By the way, usually at the time of start, the crankshaft rotation speed becomes the specified speed V at the time t2 which is after the time t0 from the time t1 and, at the time of reacceleration, the human power torque becomes the specified torque T at the time t4 which is after the time t0' from the time t3 when the crankshaft rotation speed reaches the specified speed V. Therefore, this invention includes any arrangement in which whether the vehicle is being started or reaccelerated is determined according to which is earlier the time when the human input torque reaches the specified value T or the time when the crankshaft rotation speed reaches the specified speed V.

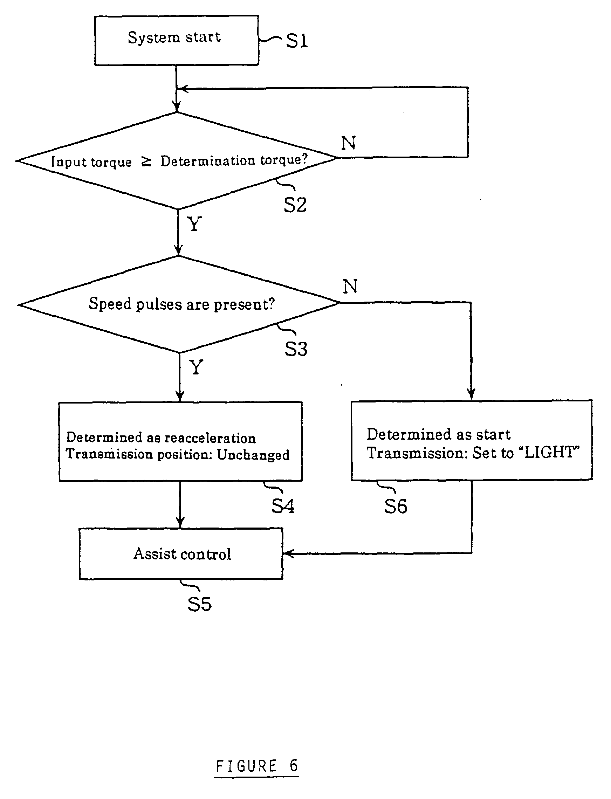

Next, the control operation of the controller 54 will be described in reference to the flow chart shown in FIG. 6.

First, as the main switch 56 is turned on, the controller 54 is started, and a control system of the power-assisted bicycle 1 is started (step S1). If the human power torque detected as described above is smaller than the determination torque T, the following process of assist start determination is waited for (step S2).

When the human power torque is greater than the determination torque and speed pulses showing the crankshaft rotation speed are present at that time, or more preferably when the crankshaft rotation speed is determined to be greater than the specified speed V (step S3), the vehicle is determined to be being reaccelerated as described above, variable speed position of an automatic transmission is held to the current position, and assist power supply is controlled to be commensurate with the reacceleration (steps S4 and S5). By the way, the variable speed position of the continuously variable transmission may be controlled to a position corresponding to a current running speed. The human power torque is detected with the magnitude of signal voltage from the pedal force sensor 73. The rotation speed of the crankshaft is detected with pulses from the vehicle speed sensor 74.

In the above step S3, when the human power torque exceeds the determination torque and if there is no speed pulse representing the crankshaft rotation speed at that time, or more preferably if the crankshaft rotation speed is equal to or less than V, the vehicle is determined to be being started, the automatic transmission is set to a low speed position (step S6), and the assist power control of the above step S5 is carried out.

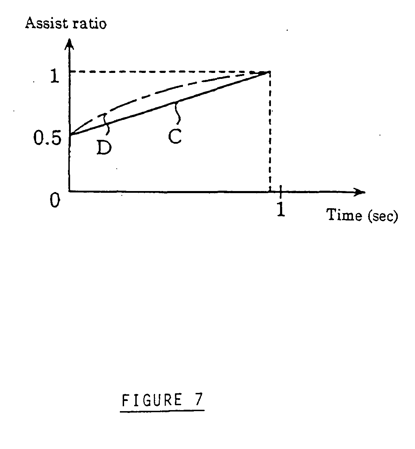

Here, the above-described assist power control is carried out as shown in FIG. 7 so that a ratio of assist power to the pedal force (assist ratio) for reacceleration is smaller than that for starting and that the assist ratio for reacceleration is gradually increased to agree, after a specified period of time elapses, with the assist ratio for the starting. In other words, while the assist ratio for starting is always 1, the assist ratio for reacceleration is set to 0.5 and controlled to increase with the lapse of time and to agree with the assist ratio for starting after a specified period of time elapses. By the way, the gradual increase in the assist ratio may be changed in proportion to time as shown with a characteristic curve C of FIG. 7 or the increase rate may be changed as shown with a characteristic curve D of FIG. 7.

In this way, the assist power for starting is controlled as shown with a broken line curve E in FIG. 4 to the same magnitude as the input torque. When the crankshaft rotation speed exceeds a preset intermediate speed (for example 15 km/h), the assist ratio is gradually decreased to reach zero at the maximum speed (for example 24 km/h).

The assist power for reacceleration is controlled as shown with a broken line curve E' in FIG. 5 to gradually increase from about a half of the input torque. In the middle, the assist ratio becomes about the same as that for starting. Thereafter, the control is the same as that for starting.

With the assist power control device 54 of the invention described above, in the case the vehicle speed is detected from the crankshaft rotation, whether the vehicle is being started or reaccelerated is determined from the crankshaft rotation speed when the human power torque reaches the specified value T, and the assist ratio is set smaller for reacceleration than for starting. As a result, an excessive amount of assist power which is the same as that for starting is prevented from being supplied at the time of inputting human power after coasting. As a result, running feeling is improved.

Since it is arranged that the assist ratio for reacceleration agrees with the assist ratio for starting after a specified period of time elapses, short supply of assist power does not occur at the time of reacceleration. This also improves the running feeling.

Furthermore, since the variable transmission is controlled to be in low gear at the time of starting and to remain in high gear at the time of reacceleration, the assist power is supplied sufficiently at the time of starting and prevented from being supplied excessively at the time of reacceleration.

Furthermore with the assist power control device 68 of the embodiment, since the type of battery is determined and power supply to the electric motor 44 is controlled according to the battery type, different type and capacity of battery may be used on the same vehicle to save maintenance work and cost.

Furthermore, since a single controller may handle different types of batteries, a specific controller is not required for each type of battery. This facilitates production control, parts control, and reduces cost.

Here, in order to prevent the assist power from increasing excessively, it is also effective to set the torque T' for determining the start of assist power supply for reacceleration smaller than the determination torque T for starting.

When control is carried out as described above, since the assist power is supplied little by little from the time when the input torque is small, shocks as in the case the assist power is applied suddenly is alleviated. From this point too, running feeling is improved.

As described above, with the assist power control device according to an embodiment of the invention, since the assist power supply state is changed according to the determination whether the vehicle is being started or reaccelerated, vehicle running feeling is improved.

With another embodiment of the invention, since the assist ratio is set smaller for reacceleration than for starting, the assist power is prevented from being supplied excessively when the vehicle running state changes from coasting to powered running. This improves running feeling.

With a further embodiment of the invention since the assist ratio for reacceleration is gradually increased to agree with the assist ratio at the time of starting after a specified period of elapses, short supply of assist power is prevented at the time of reacceleration, and running feeling is improved.

With a still further embodiment of the invention, since the assist power supply start torque (determination torque) for reacceleration is set smaller than that at the time of starting, the assist power is prevented from being supplied excessively at the time of reacceleration. This improves running feeling.

With other embodiments of the invention, since whether the vehicle is being started or reaccelerated is determined from the input torque and the crankshaft rotation speed, an effect is provided that starting and reacceleration are discriminated with a simple structure without adding sensors or the like to the conventional structure.

## Claims

1. Muscle-operated vehicle (1), especially bicycle, comprising a muscle-operated driving system having a crankshaft (46) rotatable by muscle power from a driver, an electrical power drive system for providing assist power, and a controller (54) for controlling the amount of assist power from said electrical power drive system in response to vehicle operating conditions detected, **characterized in that** said controller (54) comprises determining means (73,74,52,53) for determining whether said vehicle is being started or is being re-accelerated after coasting for controlling in response to the determination made the ratio of assist power to the muscle power applied to the crankshaft (46) and thereby the amount of power assist for vehicle starting conditions and vehicle re-acceleration conditions individually.

2. Muscle-operated vehicle according to claim 1, **characterized in that** said determining means comprising a CPU (70) and a vehicle speed sensor (74) detecting the rotational speed of the crankshaft (46).

3. Muscle-operated vehicle according to claim 1 or 2, **characterized in that** said controller (54) is adapted to control the ratio of assist power to the muscle power applied to the crankshaft (46) to be smaller under re-acceleration conditions than under starting conditions, determined.

4. Muscle-operated vehicle according to claim 3, **characterized in that** said controller (54) is adapted to control the ratio of assist power to the muscle power such that this ratio of assist power to muscle power gradually increases under re-acceleration conditions.

5. Muscle-operated vehicle according to claim 4, **characterized in that** said ratio of assist power to muscle power agrees with the ratio of assist power to muscle power for starting after a specified period of time.

6. Muscle-operated vehicle according to at least one of the preceding claims 1 to 5, **characterized in that** said controller (54) is adapted to control an assist power supply start determining torque (T') for re-acceleration to be smaller than an assist power supply start determining torque (T) for starting.

7. Muscle-operated vehicle according to at least one of the preceding claims 1 to 6, **characterized in that** said assist power in addition is controllable according to the muscle power detectable by a pedal force sensor (73).

8. Muscle-operated vehicle according to at least one of the preceding claims 1 to 7, **characterized in that** said determining means (70,74) is adapted to determine that the vehicle is being started based on whether the rotational speed of said crankshaft (46) is equal to or smaller than a specified value (V) when a muscle power detectable by a pedal force sensor (73) reaches a specified value (T) and to determine that the vehicle is being re-accelerated based on whether the rotational speed of said crankshaft (46) is equal to or larger than the specified value (V) when the muscle power reaches said specified value (T).

9. Muscle-operated vehicle according to at least one of the preceding claims 1 to 8, **characterized in that** said determining means (70,74) is adapted to determine that the vehicle is being started based on whether the rotational speed of said crankshaft (46) reaches a specified value (V) after the muscle power has reached a specified value (T) and to determine that the vehicle is re-accelerated based on whether the muscle power reaches a specified value (T) after the rotational speed of the crankshaft (46) has reached the specified value (V).

10. Muscle-operated vehicle according to at least one of the preceding claims 1 to 9, **characterized by** a means (63) for receiving a memory card having a memory of assist power supply degree commensurate with a rider's physical strength and the like.

11. Muscle-operated vehicle according to at least one of the preceding claims 1 to 10, **characterized in that** said controller (54) is provided with a battery type detection means (72) for controlling the assist power according to the battery type.

12. Muscle-operated vehicle according to at least one of the preceding claims 1 to 11, **characterized in that** said determining means (70,74) is adapted to determine whether said vehicle is being started or re-accelerated according to which occurs earlier the time when the muscle power reaches a specified value (T) or the time when the rotational speed of the crankshaft (46) reaches a specified value (V).

13. Method for controlling an electrical assist power of a muscle-operated vehicle (1), especially bicycle, comprising a muscle-operated driving system having a crankshaft (46) rotatable by muscle power, an electrical power drive system for providing assist power, and a controller (54) for controlling the amount of assist power from said electrical power drive system in response to vehicle operating conditions detected, **characterized in that** it is determined whether said vehicle is being started or is being re-accelerated after coasting and that the ratio of assist power from said electrical power drive means to the muscle power applied to the crankshaft (46) and thereby the amount of power assist is controlled individually for vehicle starting conditions and vehicle re-acceleration conditions in response to the results of the determining step.

14. Method according to claim 13, **characterized in that** said determination is made on the basis of the rotational speed of the crankshaft (46).

15. Method according to claim 13 or 14, **characterized in that** said controller (54) controls the ratio of assist power to a muscle power applied to the crankshaft (46) to be smaller under re-acceleration conditions than under starting conditions, determined.

16. Method according to claim 15, **characterized in that** said controller (54) controls the ratio of assist power to the muscle power such that this ratio of assist power to muscle power gradually increases under re-acceleration conditions.

17. Method according to claim 16, **characterized in that** said ratio of assist power to muscle power agrees with the ratio of assist power to muscle power for starting after a specified period of time.

18. Method according to at least one of the preceding claims 13 to 17, **characterized in that** said controller (54) controls an assist power supply start determining torque (T') for re-acceleration to be smaller than an assist power supply start determining torque (T) for starting.

19. Method according to at least one of the preceding claims 13 to 18, **characterized in that** said determining means (70,74) determines said assist power in addition is controllable according to the muscle power detectable by a pedal force sensor (73).

20. Method according to at least one of the preceding claims 13 to 19, **characterized in that** said determining means (70,74) determines that the vehicle is being started based on whether the rotational speed of said crankshaft (46) is equal to or smaller than a specified value (V) when a muscle power detectable by a pedal force sensor (73) reaches a specified value (T) and determines that the vehicle is being re-accelerated based on whether the rotational speed of said crankshaft (46) is equal to or larger than the specified value (V) when the muscle power reaches said specified value (T).

21. Method according to at least one of the preceding claims 13 to 20, **characterized in that** said determining means (70,74) determines that the vehicle is being started based on whether the rotational speed of said crankshaft (46) reaches a specified value (V) after the muscle power has reached a specified value (T) and determines that the vehicle is re-accelerated based on whether the muscle power reaches a specified value (T) after the rotational speed of the crankshaft (46) has reached the specified value (V).

22. Method according to at least one of the preceding claims 13 to 21, **characterized in that** an assist power supply degree commensurate with a rider's physical strength and the like is stored in a memory card.

23. Method according to at least one of the preceding claims 13 to 22, **characterized in that** the assist power is further controlled in accordance with the type of a battery.

## Patentansprüche

1. Muskelkraftbetätigtes Fahrzeug (1), insbesondere Fahrrad, mit einem muskelkraftbetätigten Antriebssystem, das eine Kurbelwelle (46) hat, drehbar durch Muskelkraft von einem Fahrer, ein elektrisches Antriebssystem zur Bereitstellung von Unterstützungskraft. und eine Steuereinrichtung (54) zum Steuern des Betrages der Unterstützungskraft von dem elektrischen Antriebssystem in Abhängigkeit von den erfaßten Fahrzeugbetriebsbedingungen, **dadurch gekennzeichnet, daß** die Steuereinrichtung (54) Bestimmungsmittel (73, 74, 52, 53) aufweist, zur Bestimmung, ob das Fahrzeug gerade gestartet wird oder nach dem Fahren im Leerlauf wiederbeschleunigt wird. um in Abhängigkeit von der getroffenen Bestimmung das Verhältnis von Unterstützungskraft zu Muskelkraft, übertragen auf die Kurbelwelle (46), und dadurch auf dem Betrag der Antriebsunterstützung für die Fahrzeugstartbedingungen und die Fahrzeugwiederbeschleunigungsbedingungen individuell zu steuern.

2. Muskelkraftbetätigtes Fahrzeug nach Anspruch 1, **dadurch gekennzeichnet, daß** die Bestimmungsmittel eine CPU (70) und ein Fahrzeuggeschwindigkeitssensor (74) sind, der die Drehzahl der Kurbelwelle (46) erfaßt.

3. Muskelkraftbetätigtes Fahrzeug nach Anspruch 1 oder 2. **dadurch gekennzeichnet, daß** die Steuereinrichtung (54) vorgesehen ist, das Verhältnis von Unterstützungskraft zu Muskelkraft, übertragen auf die Kurbelwelle (46), so zu steuern, daß es kleiner unter Wiederbeschleunigungsbedingungen ist, als unter bestimmten Startbedingungen.

4. Muskelkraftbetätigtes Fahrzeug nach Anspruch 3. **dadurch gekennzeichnet, daß** die Steuererung (54) vorgesehen ist, das Verhältnis von Unterstützungskraft zu Muskelkraft zu steuern, derart, **daß** sich dieses Verhältnis der Unterstützungskraft zur Muskelkraft unter Wiederbeschleunigungsbedingungen allmählich erhöht.

5. Muskelkraftbetätigtes Fahrzeug nach Anspruch 4. **dadurch gekennzeichnet, daß** das Verhältnis der Unterstützungskraft zu Muskelkraft übereinstimmt mit dem Verhältnis von Unterstützungskraft zu Muskelkraft für das Starten nach einer bestimmten Zeitspanne.

6. Muskelkraftbetätigtes Fahrzeug nach zumindest einem der vorhergehenden Ansprüche 1 bis 5. **dadurch gekennzeichnet, daß** die Steuereinrichtung (54) vorgesehen ist, ein Bestimmungsdrehmoment (T') zum Beginn der Unterstützungskraftzuführung derart zu steuern, **daß** die Wiederbeschleunigung kleiner ist. als das Bestimmungsdrehmoment (T') zum Beginn der Unterstützungskraftzuführung für das Starten.

7. Muskelkraftbetätigtes Fahrzeug nach zumindest einem der vorhergehenden Ansprüche 1 bis 6, **dadurch gekennzeichnet, daß** die Unterstützungskraft zusätzlich steuerbar ist, entsprechend der Muskelkraft, erfaßbar durch einen Pedalkraftsensor (73).

8. Muskelkraftbetätigtes Fahrzeug nach zumindest einem der vorhergehenden Ansprüche 1 bis 7, **dadurch gekennzeichnet, daß** die Bestimmungseinrichtung (70, 74) vorgesehen ist, zu bestimmen, **daß** das Fahrzeug gestartet wird, auf der Grundlage, ob die Drehzahl der Kurbelwelle (46) gleich ist zu oder kleiner ist als ein bestimmter Wert (V), wenn eine Muskelkraft, erfaßbar durch einen Pedalkraftsensor (73), einen bestimmten Wert (T) erreicht und um zu bestimmen, **daß** das Fahrzeug wiederbeschleunigt wird, auf der Grundlage, ob die Drehzahl der Kurbelwelle (46) gleich ist oder größer ist als der bestimmte Wert (V). wenn die Muskelkraft diesen bestimmten Wert (T) erreicht.

9. Muskelkraftbetätigtes Fahrzeug nach zumindest einem der vorhergehenden Ansprüche 1 bis 8, **dadurch gekennzeichnet, daß** die Bestimmungseinrichtung (70, 74) vorgesehen ist, zu bestimmen, daß das Fahrzeug gestartet wird, auf der Grundlage, ob die Drehzahl der Kurbelwelle (46) einen bestimmten Wert (V) erreicht hat, nachdem die Muskelkraft einen bestimmten Wert (T) erreicht, und um zu bestimmen, daß das Fahrzeug wiederbeschleunigt wird, auf der Grundlage, ob die Muskelkraft einen bestimmten Wert (T) erreicht, nachdem die Drehzahl der Kurbelwelle (46) den bestimmten Wert (V) erreicht hat.

10. Muskelkraftbetätigtes Fahrzeug nach zumindest einem der vorhergehenden Ansprüche 1 bis 9, **gekennzeichnet durch** eine Einrichtung (63) zum Aufnehmen einer Speicherkarte, die einen Speicher betreffend den Grad von Unterstützungskraftzuführung abgestimmt auf die physische Verfassung oder dergleichen eines Fahrers.

11. Muskelkraftbetätigtes Fahrzeug nach zumindest einem der vorhergehenden Ansprüche 1 bis 10, **dadurch gekennzeichnet, daß** die Steuereinrichtung (54) mit einer Batterietyp-Erfassungseinrichtung (72) versehen ist, zur Steuerung der Unterstützungskraft entsprechend des Batterietyps.

12. Muskelkraftbetätigtes Fahrzeug nach zumindest einem der vorhergehenden Ansprüche 1 bis 11, **dadurch gekennzeichnet, daß** die Bestimmungseinrichtung (70, 74) vorgesehenist, zu bestimmen, ob das Fahrzeug gerade gestartet wird oder wiederbeschleunigt wird, in Abhängigkeit davon, was früher auftritt, die Zeit, wenn die Muskelkraft einen bestimmten Wert (T) erreicht oder die Zeit, wenn die Drehzahl der Kurbelwelle (46) einen bestimmten Wert (V) erreicht.

13. Verfahren zur Steuerung einer elektrischen Unterstützungskraft eines muskelkraftbetätigten Fahrzeuges (1), insbesondere Fahrrades, mit einem muskelkraftbetätigten Antriebssystem, das eine Kurbelwelle (46) hat, drehbar durch Muskelkraft. ein elektrisches Antriebssystem zur Bereitstellung von Unterstützungskraft, und eine Steuereinrichtung (54) zum Steuern des Betrages der Unterstützungskraft von dem elektrischen Antriebssystem in Abhängigkeit von den erfaßten Fahrzeugbetriebsbedingungen, **dadurch gekennzeichnet, daß** es bestimmt wird, ob das Fahrzeug gestartet wird oder nach dem Leerlauf wiederbeschleunigt wird und **daß** das Verhältnis von Unterstützungskraft von der elektrischen Antriebseinrichtung zu der Muskelkraft, übertragen auf die Kurbelwelle (46), und dadurch der Betrag der Kraftunterstützung individuell für Fahrzeugstartbedingungen und Wiederbeschleunigungsbedingungen in Abhängigkeit von den Ergebnissen des Bestimmungsschrittes gesteuert wird.

14. Verfahren nach Anspruch 13, **dadurch gekennzeichnet, daß** die Bestimmung auf der Grundlage der Drehzahl der Kurbelwelle (46) getroffen wird.

15. Verfahren nach Anspruch 13 oder 14, **dadurch gekennzeichnet, daß** die Steuereinrichtung (54) das Verhältnis von Unterstützungskraft zu einer Muskelkraft, angewandt auf die Kurbelwelle (46), so steuert, **daß** unter Wiederbeschleunigungsbedingungen kleiner ist, als unter festgestellten Startbedingungen.

16. Verfahren nach Anspruch 15, **dadurch gekennzeichnet, daß** die Steuereinrichtung (54) das Verhältnis von Unterstützungskraft zu der Muskelkraft steuert, derart, **daß** dieses Verhältnis von Unterstützungskraft zu Muskelkraft allmählich unter Wiederbeschleunigungsbedingungen zunimmt.

17. Verfahren nach Anspruch 16, **dadurch gekennzeichnet, daß** das Verhältnis von Unterstützungskraft zu Muskelkraft mit dem Verhältnis von Unterstützungskraft zu Muskelkraft für das Starten nach einer bestimmten Zeitdauer übereinstimmt.

18. Verfahren nach zumindest einem der vorangehenden Ansprüche 13 bis 17. **dadurch gekennzeichnet, daß** die Steuereinrichtung (54) ein Unterstützungskraftzuführungs-Startbedingungsdrehmoment (T') steuert, derart. daß es für Wiederbeschleunigung kleiner ist, als ein Unterstützungskraftzuführungs- Startbedingungsdrehmoment (T) für das Starten.

19. Verfahren nach zumindest einem der vorangehenden Ansprüche 13 bis 18. **dadurch gekennzeichnet, daß** die Bestimmungseinrichtung (70, 74) bestimmt, **daß** die Unterstützungskraft zusätzlich entsprechend der Muskelkraft. die durch einen Pedalkraftsensor (73) erfaßbar ist, steuerbar ist.

20. Verfahren nach zumindest einem der vorangehenden Ansprüche 13 bis 19. **dadurch gekennzeichnet, daß** die Bestimmungseinrichtung (70, 74) bestimmt, **daß** das Fahrzeug gerade gestartet wird. auf der Grundlage, ob die Drehzahl der Kurbelwelle (46) gleich ist zu, oder kleiner ist als ein bestimmter Wert (V). wenn eine Muskelkraft, erfaßbar durch einen Pedalkraftsensor (73), einen bestimmten Wert (T) erreicht und bestimmt, **daß** das Fahrzeug gerade wiederbeschleunigt wird. auf der Grundlage, ob die Drehzahl der Kurbelwelle (46) gleich ist zu, oder größer ist als der bestimmte Wert (V), wenn die Muskelkraft den bestimmten Wert (T) erreicht.

21. Verfahren nach zumindest einem der vorangehenden Ansprüche 13 bis 20. **dadurch gekennzeichnet, daß** die Bestimmungseinrichtung (70. 74) bestimmt, **daß** das Fahrzeug gerade gestartet wird. auf der Grundlage, ob die Drehzahl der Kurbelwelle (46) einen bestimmten Wert (V) erreicht, nachdem die Muskelkraft einen bestimmten Wert (T) erreicht hat, und bestimmt, **daß** das Fahrzeug wiederbeschleunigt wird, auf der Grundlage, ob die Muskelkraft einen bestimmten Wert (T) erreicht hat, nachdem die Rotationsgeschwindigkeit der Kurbelwelle (46) den bestimmten Wert (V) erreicht hat.

22. Verfahren nach zumindest einem der vorangehenden Ansprüche 13 bis 21, **dadurch gekennzeichnet, daß** ein Unterstützungskraftzuführungsgrad, angepaßt an eine physische Stärke und dergleichen des Fahrers in einer Speicherkarte gespeichert ist.

23. Verfahren nach zumindest einem der vorangehenden Ansprüche 13 bis 22. **dadurch gekennzeichnet, daß** die Unterstützungskraft weiter in Übereinstimmung mit dem Typ einer Batterie gesteuert wird.

## Revendications

1. Véhicule propulsé par force musculaire (1), en particulier une bicyclette, comprenant un système d'entraînement par force musculaire comportant un axe de pédalier (46) pouvant être mis en rotation par la force musculaire d'un utilisateur, un système d'entraînement à assistance électrique destiné à fournir une puissance d'assistance et une unité de commande (54) destinée à commander la valeur de la puissance d'assistance en provenance dudit système d'entraînement à assistance électrique en réponse à des conditions de fonctionnement du véhicule détectées, **caractérisé en ce que** ladite unité de commande (54) comprend des moyens de détermination (73, 74, 52, 53) destinés à déterminer si ledit véhicule est mis en marche ou est à nouveau accéléré après une roue libre afin d'effectuer une commande en réponse à la détermination effectuée du rapport entre la puissance d'assistance et la force musculaire appliquée sur l'axe de pédalier (46) et ainsi, indépendamment, la valeur de puissance d'assistance pour des conditions de mise en marche du véhicule et pour des conditions de nouvelle accélération du véhicule.

2. Véhicule propulsé par force musculaire selon la revendication 1, **caractérisé en ce que** lesdits moyens de détermination comprennent une unité centrale de traitement (70) et un détecteur de vitesse d'avance de véhicule (74) détectant la vitesse de rotation de l'axe de pédalier (46).

3. Véhicule propulsé par force musculaire selon la revendication 1 ou la revendication 2, **caractérisé en ce que** ladite unité de commande (54) est adaptée pour commander le rapport entre la puissance d'assistance et la force musculaire appliquée sur l'axe de pédalier (46) afin qu'il soit plus petit dans des conditions de nouvelle accélération que dans des conditions de mise en marche déterminées.

4. Véhicule propulsé par force musculaire selon la revendication 3, **caractérisé en ce que** ladite unité de commande (54) est adaptée pour commander le rapport entre la puissance d'assistance et la force musculaire de sorte que ce rapport entre la puissance d'assistance et la force musculaire augmente progressivement dans des conditions de nouvelle accélération.

5. Véhicule propulsé par force musculaire selon la revendication 4, **caractérisé en ce que** ledit rapport entre la puissance d'assistance et la force musculaire s'accorde avec le rapport entre la puissance d'assistance et la force musculaire nécessaire à la mise en marche après une période de temps spécifiée.

6. Véhicule propulsé par force musculaire selon au moins l'une des revendications précédentes 1 à 5, **caractérisé en ce que** ladite unité de commande (54) est adaptée pour commander un couple de détermination de démarrage d'alimentation en puissance d'assistance (T') destiné à une nouvelle accélération de manière qu'il soit plus petit qu'un couple de détermination de démarrage d'alimentation en puissance d'assistance (T) destiné à la mise en marche.

7. Véhicule propulsé par force musculaire selon au moins l'une des revendications précédentes 1 à 6, **caractérisé en ce qu'**en outre ladite puissance d'assistance peut être commandée en fonction de la force musculaire pouvant être détectée par un détecteur de force de pédalage (73).

8. Véhicule propulsé par force musculaire selon au moins l'une des revendications précédentes 1 à 7, **caractérisé en ce que** lesdits moyens de détermination (70, 74) sont adaptés pour déterminer que le véhicule est mis en marche sur la base du fait que la vitesse de rotation dudit axe de pédalier (46) est égale ou inférieure à une valeur spécifiée (V) lorsqu'une force musculaire pouvant être détectée par un détecteur de force de pédalage (73) atteint une valeur spécifiée (T) et pour déterminer que le véhicule est à nouveau accéléré sur la base du fait que la vitesse de rotation dudit axe de pédalier (46) est égale ou supérieure à la valeur spécifiée (V) lorsque la force musculaire atteint ladite valeur spécifiée (T).

9. Véhicule propulsé par force musculaire selon au moins l'une des revendications précédentes 1 à 8, **caractérisé en ce que** lesdits moyens de détermination (70, 74) sont adaptés pour déterminer que le véhicule est mis en marche sur la base du fait que la vitesse de rotation dudit axe de pédalier (46) atteint une valeur spécifiée (V) après que la force musculaire a atteint une valeur spécifiée (T) et pour déterminer que le véhicule est à nouveau accéléré sur la base du fait que la force musculaire atteint une valeur spécifiée (T) après que la vitesse de rotation de l'axe de pédalier (46) a atteint la valeur spécifiée (V).

10. Véhicule propulsé par force musculaire selon au moins l'une des revendications précédentes 1 à 9, **caractérisé par** des moyens (63) destinés à recevoir une carte à mémoire comportant une mémoire de degré d'alimentation en puissance d'assistance commensurable à la force physique de l'utilisateur et similaire.

11. Véhicule propulsé par force musculaire selon au moins l'une des revendications précédentes 1 à 10, **caractérisé en ce que** ladite unité de commande (54) comporte des moyens de détection de type de batterie (72) destinés à commander la puissance d'assistance en fonction du type de batterie.

12. Véhicule propulsé par force musculaire selon au moins l'une des revendications précédentes 1 à 11, **caractérisé en ce que** lesdits moyens de détermination (70, 74) sont adaptés pour déterminer si ledit véhicule est mis en marche ou à nouveau accéléré en fonction de ce qui se produit avant le moment où la force musculaire atteint une valeur spécifiée (T) ou le moment où la vitesse de rotation dudit axe de pédalier (46) atteint une valeur spécifiée (V).

13. Procédé de commande d'une puissance d'assistance électrique d'un véhicule propulsé par force musculaire (1), en particulier une bicyclette, comprenant un système d'entraînement par force musculaire comportant un axe de pédalier (46) pouvant être mis en rotation par la force musculaire, un système d'entraînement à assistance électrique destiné à fournir une puissance d'assistance, et une unité de commande (54) destinée à commander la valeur de la puissance d'assistance en provenance dudit système d'entraînement à assistance électrique en réponse à des conditions de fonctionnement du véhicule détectées, **caractérisé en ce qu'**il est déterminé si ledit véhicule est mis en marche ou est à nouveau accéléré après un roulage libre et **en ce que** le rapport entre la puissance d'assistance en provenance desdits moyens d'entraînement à assistance électrique et la force musculaire appliquée à l'axe de pédalier (46), et ainsi la valeur de puissance d'assistance, est commandé de manière indépendante pour les conditions de mise en marche du véhicule et pour les conditions de nouvelle accélération du véhicule en réponse aux résultats de l'étape de détermination.

14. Procédé selon la revendication 13, **caractérisé en ce que** ladite détermination est effectuée sur la base de la vitesse de rotation de l'axe de pédalier (46).

15. Procédé selon la revendication 13 ou la revendication 14, **caractérisé en ce que** ladite unité de commande (54) commande le rapport entre la puissance d'assistance et une force musculaire appliquée sur l'axe de pédalier (46) afin qu'il soit plus petit dans des conditions de nouvelle accélération que dans des conditions de mise en marche déterminées.

16. Procédé selon la revendication 15, **caractérisé en ce que** ladite unité de commande (54) commande le rapport entre la puissance d'assistance et la force musculaire de sorte que ce rapport entre la puissance d'assistance et la force musculaire augmente progressivement dans des conditions de nouvelle accélération.

17. Procédé selon la revendication 16, **caractérisé en ce que** ledit rapport entre la puissance d'assistance et la force musculaire s'accorde avec le rapport entre la puissance d'assistance et la force musculaire nécessaire à la mise en marche après une période de temps spécifiée.

18. Procédé selon au moins l'une des revendications précédentes 13 à 17, **caractérisé en ce que** ladite unité de commande (54) commande un couple de détermination de démarrage d'alimentation en puissance d'assistance (T') destiné à une nouvelle accélération de manière qu'il soit plus petit qu'un couple de détermination de démarrage d'alimentation en puissance d'assistance (T) destiné à la mise en marche.

19. Procédé selon au moins l'une des revendications précédentes 13 à 18, **caractérisé en ce que** lesdits moyens de détermination (70, 74) déterminent en outre ladite puissance d'assistance pouvant être commandée en fonction de la force musculaire pouvant être détectée par un détecteur de force de pédalage (73).

20. Procédé selon au moins l'une des revendications précédentes 13 à 19, **caractérisé en ce que** lesdits moyens de détermination (70, 74) déterminent que le véhicule est mis en marche sur la base du fait que la vitesse de rotation dudit axe de pédalier (46) est égale ou inférieure à une valeur spécifiée (V) lorsqu'une force musculaire pouvant être détectée par un détecteur de force de pédalage (73) atteint une valeur spécifiée (T) et déterminent que le véhicule est à nouveau accéléré sur la base du fait que la vitesse de rotation dudit axe de pédalier (46) est égale ou supérieure à la valeur spécifiée (V) lorsque la force musculaire atteint ladite valeur spécifiée (T).

21. Procédé selon au moins l'une des revendications précédentes 13 à 20, **caractérisé en ce que** lesdits moyens de détermination (70, 74) déterminent que le véhicule est mis en marche sur la base du fait que la vitesse de rotation dudit axe de pédalier (46) atteint une valeur spécifiée (V) après que la force musculaire a atteint une valeur spécifiée (T) et déterminent que le véhicule est à nouveau accéléré sur la base du fait que la force musculaire atteint une valeur spécifiée (T) après que la vitesse de rotation de l'axe de pédalier (46) a atteint la valeur spécifiée (V).

22. Procédé selon au moins l'une des revendications précédentes 13 à 21, **caractérisé en ce qu'**un degré d'alimentation en puissance d'assistance commensurable à la force physique d'un utilisateur et similaire est stocké dans une carte à mémoire.

23. Procédé selon au moins l'une des revendications précédentes 13 à 22, **caractérisé en ce que** la puissance d'assistance est en outre commandée en fonction du type de batterie.
